# EUROPEAN PATENT APPLICATION

(11) **EP 2 374 701 A1**
(43) Date of publication of application: **12.10.2011**
(21) Application number: 10159343.2
(22) Date of filing: 08.04.2010
(51) Int. Cl.: B62M 3/08, B62M 3/16

(54) **Pedal retaining apparatus**

(71) Applicant: Wellgo Pedal's Corp., Tachia, Taichung Hsien 43713 (TW)
(72) Inventor: Chen, Chung-I, 43713, TAICHIA, TAICHUNG HSIEN (TW)
(74) Representative: Chaillot, Geneviève

(57) **Abstract**

A pedal retaining apparatus includes a driving unit 2 adapted to engage with a pedal 5. The driving unit 2 has a first magnetic unit 23 disposed thereon. A positioning unit 3 corresponding to the driving unit 2. The positioning unit 3 has a second magnetic unit 31 disposed thereon. The second magnetic unit 31 corresponded to the first magnetic unit 23. The pedal 5 is magnetically retained in a predetermined position due to a magnetic force between the first magnetic unit 23 and the second magnetic unit 31; when the pedal 5 rotates relative to the spindle 1, the magnetic force between the first magnetic unit 23 and the second magnetic unit 31 drives the driving unit 2 to rotatably regain the predetermined position for the pedal 5 to synchronously rotate with the driving unit 2 to regain the predetermined position.

## Description

### 1. Field of the Invention

The present invention relates to a pedal retaining assembly, and more particularly, to a pedal retaining apparatus for magnetically retaining a pedal at a predetermined position.

### 2. Description of Related Art

Cycling has become an extremely popular recreational activity throughout the world in recent decades. As more and more people indulge themselves in cycling, a demand for innovation and improvement of bicycles and bicycle parts has arisen.

A conventional bicycle pedal assembly available in the market generally includes a pedal and a spindle. The spindle axially passes through the pedal and is threaded to a bicycle crank, such that the pedal is rotatable relative to the spindle. A rider is able to exert a force on the pedal to drive the crank, thereby a bicycle is driven through the rotational pedaling motions of the rider. However, the conventional bicycle pedal assembly has the following drawbacks: first of all, due to the arbitrarily rotatable movement of the pedal relative to the spindle, the rider has to firstly manually flip the pedal to an initial position appropriate for pedaling, this step is very inconvenient and may be very bothersome for some. Secondly, during riding, especially during high speed riding or riding under severe conditions, sometimes the rider's foot may inadvertently detaches from the pedal and when the rider attempts to regain the pedals again, due to the arbitrary rotation of the pedal relative to the spindle, the pedal may not be maintained in the initial position which is appropriate for pedaling and for allowing the rider to correctly exert a force thereon, such that the rider may not be able to regain the pedal instantly, or the force may be improperly exerted, both of which could cause the rider to loses his balance and fall off from the bicycle, which may lead to serious injuries.

The present invention has arisen to obviate/ mitigate the disadvantages of the conventional bicycle pedal assembly.

The main objective of the present invention is to provide a pedal retaining apparatus for retaining a pedal in a predetermined position. To achieve the objective, the pedal retaining apparatus in accordance with the present invention comprises a driving unit which is adapted to engage with a pedal for synchronously rotating therewith. The driving unit includes a threaded portion for threadedly connecting with the pedal and a driving portion which is located adjacent to the threaded portion. The driving portion has a first magnetic unit disposed thereon. The first magnetic unit includes a first magnet. A positioning unit is adapted to be sleeved on a spindle and corresponding to the driving unit. The positioning unit has a second magnetic unit disposed thereon. The second magnetic unit is corresponded to the first magnetic unit. The second magnetic unit includes a second magnet and a third magnet. The first magnet and the second magnet have opposite polarities. The first magnet and the third magnet have a same polarity.

An adjusting ring is disposed in an inner periphery of the positioning unit and is adapted to be sleeved on the spindle. The positioning unit has a through hole laterally defined in an outer periphery thereof. A bolt passes through the through hole and abuts against the adjusting ring for preventing the adjusting ring from slipping off the positioning unit such that the adjusting ring is securely embedded in the positioning unit. An annular ring is adapted to be sleeved on the outer periphery of the spindle. The driving unit is located adjacent to the annular ring, and the positioning unit is sleeved on an outer periphery of the annular ring, such that the driving unit and the positioning ring are spaced apart by the annular ring to prevent from collision with each other due to the magnetic force between the first and the second magnetic units. The pedal is magnetically retained in a predetermined position due to a magnetic force between the first magnetic unit of the driving unit and the second magnetic unit of the positioning unit. When the pedal rotates relative to the spindle, the magnetic force between the first magnetic unit of the driving unit and the second magnetic unit of the positioning unit drives the driving unit to rotatably regain the predetermined position for the pedal to synchronously rotate with the driving unit to regain the predetermined position.

In accordance with a further aspect of the present invention, further includes a securing unit which is adapted for connecting with the pedal and fixing the driving unit. The securing unit has a polygonal shape. The driving unit has a securing hole defined in an inner periphery thereof for correspondingly engaging with the securing unit such that the driving unit is firmly secured on the pedal by the securing unit.

In accordance with another aspect of the present invention, which comprises a driving unit adapted to engage with a pedal for synchronously rotating therewith. The driving unit has a first magnetic unit disposed thereon. The first magnetic unit includes a first magnet and a second magnet. The first magnet and the second magnet have opposite polarities. A positioning unit corresponds to the driving unit and is adapted to be sleeved on a spindle. The positioning unit has a second magnetic unit disposed thereon. The second magnetic unit includes a third magnet. The third magnet corresponds to the first magnet. The third magnet has an opposite polarity with that of the first magnet. The pedal is magnetically retained in a predetermined position due to a magnetic attraction between the first magnet of the driving unit and the third magnet of the positioning unit. When the pedal rotates relative to the spindle, a magnetic repulsion between the second magnet of the driving unit and the third magnet of the positioning unit drives the driving unit to rotatably regain the predetermined position for the pedal to synchronously rotate with the driving unit to regain the predetermined position.

The present invention will become more obvious from the following description when taken in connection with the accompanying drawings which show, for purposes of illustration only, a preferred embodiment in accordance with the present invention.
In the drawings:
Fig. 1 is an exploded perspective view of a pedal retaining apparatus in accordance with the present invention;
Fig. 1A is a perspective view of a positioning unit and an adjusting ring of the pedal retaining apparatus in accordance with the present invention;
Fig. 2 is an assembled perspective view of the pedal retaining apparatus in accordance with the present invention;
Fig. 3 is a cross-sectional view of the pedal retaining apparatus in accordance with the present invention;
Fig. 4 is an exploded perspective view of a second embodiment of the pedal retaining apparatus in accordance with the present invention;
Fig. 4A is a perspective view of the positioning unit and the adjusting ring of the second embodiment of the pedal retaining apparatus in accordance with the present invention;
Fig. 5 is an assembled perspective view of the second embodiment of the pedal retaining apparatus in accordance with the present invention;
Fig. 5A is a cross-sectional view taken along segment A-A of Fig.5;
Fig. 6 is an exploded perspective view of a third embodiment of the pedal retaining apparatus in accordance with the present invention;
Fig. 7 is an assembled perspective view of the third embodiment of the pedal retaining apparatus in accordance with the present invention;
Fig. 7A is a cross-sectional view taken along segment A-A of Fig.7.
Fig. 8 is an exploded perspective view of a fourth embodiment of the pedal retaining apparatus in accordance with the present invention;
Fig. 8A is a perspective view of the positioning unit and the adjusting ring of the fourth embodiment of the pedal retaining apparatus in accordance with the present invention;
Fig. 9 is an exploded perspective view of a fifth embodiment of the pedal retaining apparatus in accordance with the present invention; and
Fig. 9A is a perspective view of the positioning unit and the adjusting unit of the fifth embodiment of the pedal retaining apparatus in accordance with the present invention.

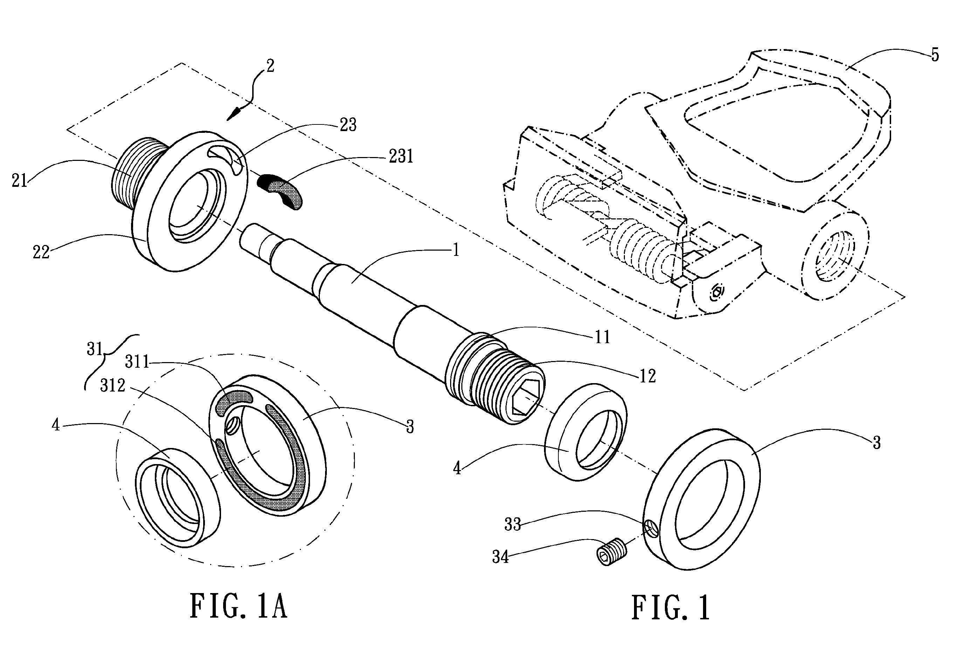

Referring to the drawings and initially to Figs. 1-3, a pedal 5 retaining apparatus in accordance with the present invention comprises a driving unit 2 adapted to engage with a pedal 5 for synchronously rotating therewith, and a positioning unit 3 which is adapted to be sleeved on a spindle 1 and located adjacent to the driving unit 2. The spindle 1 has a threaded section 12 disposed on one end thereof for connecting with a crank (not shown).The driving unit 2 includes a threaded portion 21 for threadedly connecting with the pedal 5 and a driving portion 22 which is located adjacent to the threaded portion 21. A first magnetic unit 23 is embeddedly disposed on the driving portion 22 of the driving unit 2. The first magnetic unit 23 includes a first magnet 231 embeddedly disposed thereon. The positioning unit 3 has a second magnetic unit 31 which is embeddedly disposed thereon. The second magnetic unit 31 corresponds to the first magnetic unit 23. The second magnetic unit 31 includes a second magnet 311 and a third magnet 312. The first magnet 231 and the second magnet 311 have opposite polarities. The first magnet 231 and the third magnet 312 have a same polarity. In the preferred embodiment, the second magnet 311 corresponds to a size of the first magnet 231, while the third magnet 312 has a size greater than that of the first magnet 231 and the second magnet 311. As shown in Fig. 1A, the third magnet 312 is arcuately disposed on a circumferential surface of the positioning unit 3 for corresponding to the first magnet 231 of the first magnetic unit 23 in operating state.

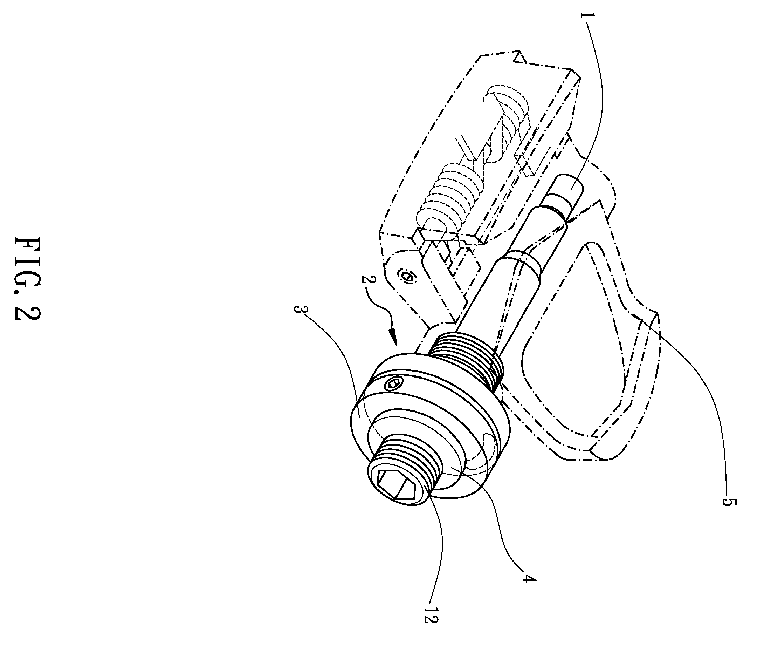

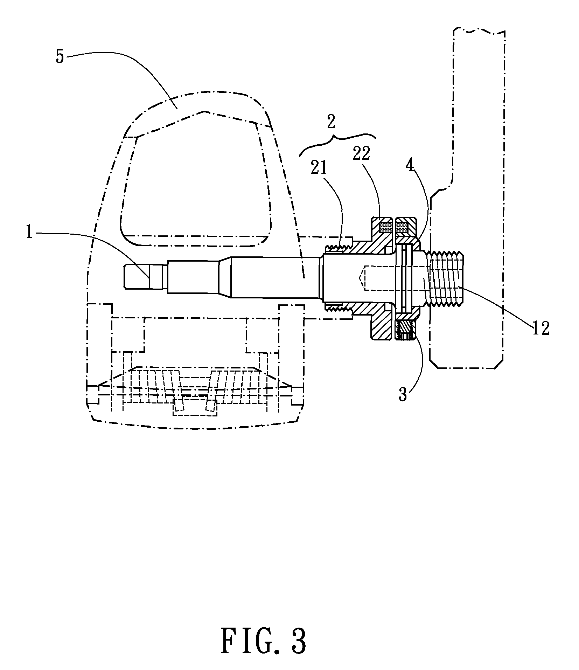

As shown in Fig.2 and Fig.3, the present embodiment further includes an annular ring 11 adapted to be sleeved on the outer periphery of the spindle 1 and located adjacent to the threaded section 12 of the spindle 1. The driving unit 2 is located adjacent to the annular ring 11, while the positioning unit 3 is sleeved on an outer periphery of the annular ring 11, such that a gap (not numbered) is defined between the driving unit 2 and the positioning unit 3, therefore the driving unit 2 and the positioning unit 3 are spaced apart by the annular ring 11 to prevent from colliding and abrading with each other due to a magnetic force between the first magnetic unit 23 and the second magnetic unit 31. An adjusting ring 4 is disposed in an inner periphery of the positioning unit 3 and is sleeved on an outer periphery of annular ring 11. The positioning unit 3 has a through hole 33 laterally (radially) defined in an outer periphery thereof. A bolt 34 passes through the through hole 33 and abuts against the adjusting ring 4 for securing the positioning unit 3 with the adjusting ring 4. The positioning unit 3 is also fixedly sleeved on the outer periphery of the annular ring 11 by the adjusting ring, such that the positioning unit 3 is refrained from rotating relative to the spindle 1 and is also prevented from colliding with the driving unit 2. A distance between the driving unit 2 and the positioning unit 3 is adjustable by loosening the bolt 34 for the positioning unit 3 to axially slide relative to the adjusting ring 4 and the spindle 1. By adjusting the distance between the driving unit 2 and the positioning unit 3, a magnitude of the magnetic force between the first magnetic unit 23 of the driving unit 2 and the second magnet unit 31 of the positioning unit 3 is changed. Thereby, a user is able to adjust the magnitude of the magnetic force between the first magnetic unit 23 of the driving unit 2 and the second magnetic unit 31 of the positioning unit 3 at desire.

The operation of the present invention is described in details below. Referring to Fig. 2 and Fig. 3, the pedal 5 is magnetically retained in a predetermined position due to a magnetic attraction between the first magnet 231 of the driving unit 2 and the second magnet 311 of the positioning unit 3. When the pedal 5 rotates relative to the spindle 1, the driving unit 2 synchronously rotates with the pedal 5, such that the first magnet 231 of the first magnetic unit 23 is rotatably displaced from the predetermined position and corresponds to the third magnet 312; thereby a magnetic repulsion between the first magnet 231 of the driving unit 2 and the third magnet 312 of the positioning unit 3 drives the driving unit 2 to rotatably regain the predetermined position for the pedal 5 to synchronously rotate with the driving unit 2 to regain the predetermined position in which the first magnet 231 of the first magnetic unit 23 corresponds to the second magnet 311 of the second magnetic unit 31 for magnetically retaining the pedal 5. Therefore, by the magnetic attraction and repulsion between the first magnetic unit 23 and the second magnetic unit 31, the pedal 5 is retained in the desirable predetermined position, and the user is able to position the pedal 5 at a position appropriate for pedaling when assembling the pedal 5.

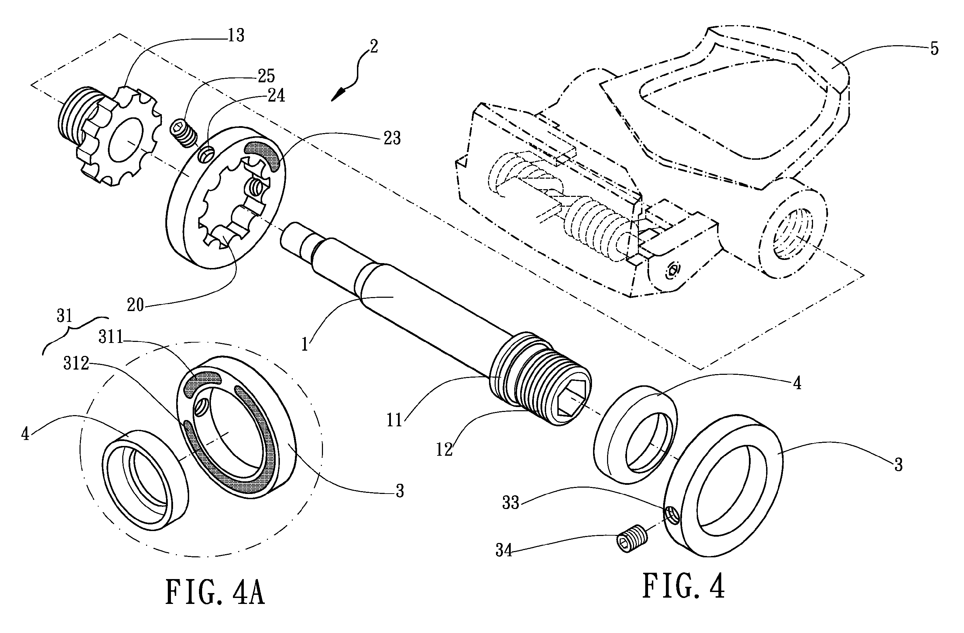

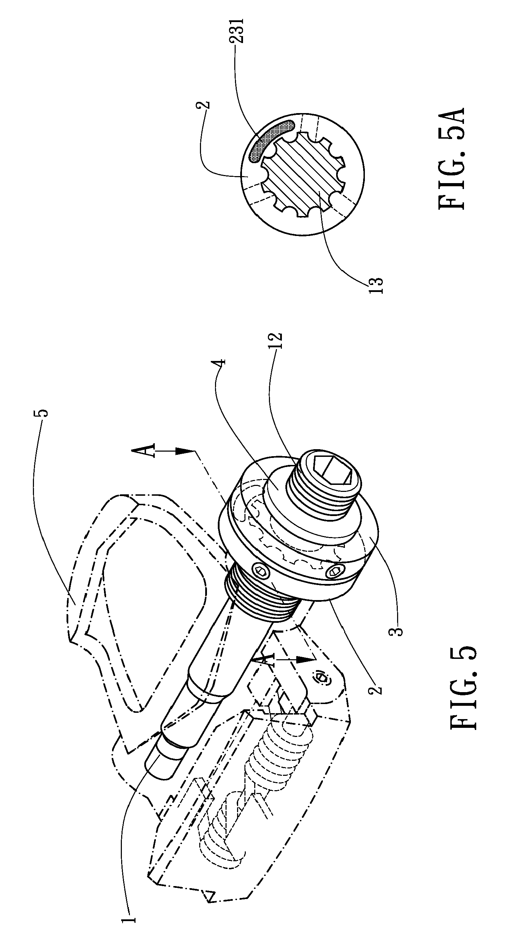

With reference to Figs.4-5, that shows a second embodiment of the present invention. The elements and effects of the second embodiment which are the same with the preferred embodiment are not described, only the differences are described. In this embodiment, the pedal retaining apparatus further includes a securing unit 13 adapted for connecting with the pedal 5. The securing unit 13 is ratchet-teeth shaped. The driving unit 2 is ring-shaped. The driving unit 2 has a securing hole 20 axially defined therein for correspondingly engaging with the securing unit 13. The securing hole 20 is ratchet-teeth shaped which corresponds to the securing unit 13. A through hole 33 is laterally (radially) defined in an outer periphery of the driving unit 2. A securing member 25 passes through the through hole 33 and abuts against the securing unit 13, such that the driving unit 2 is firmly secured on the pedal 5 by the securing unit 13.

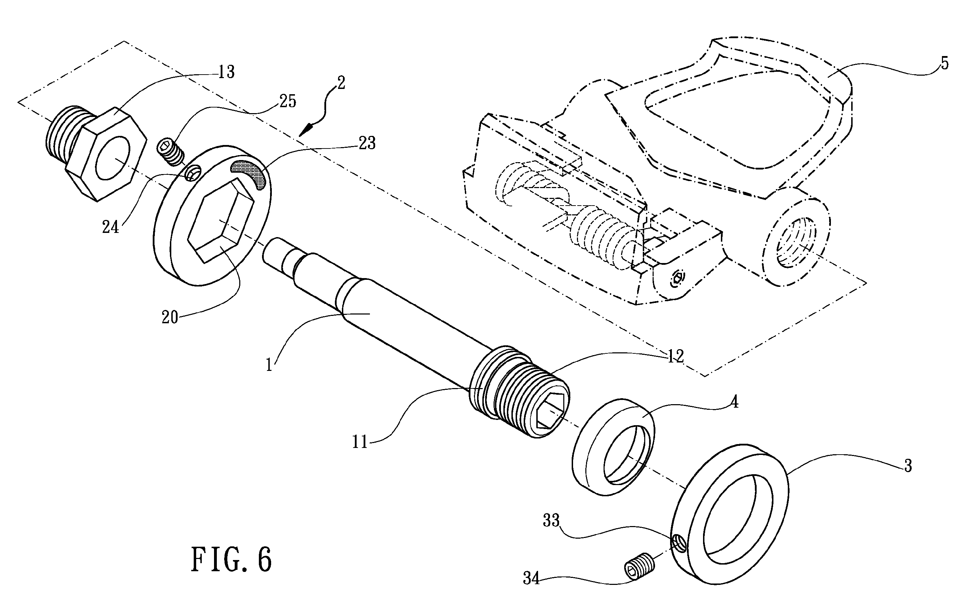

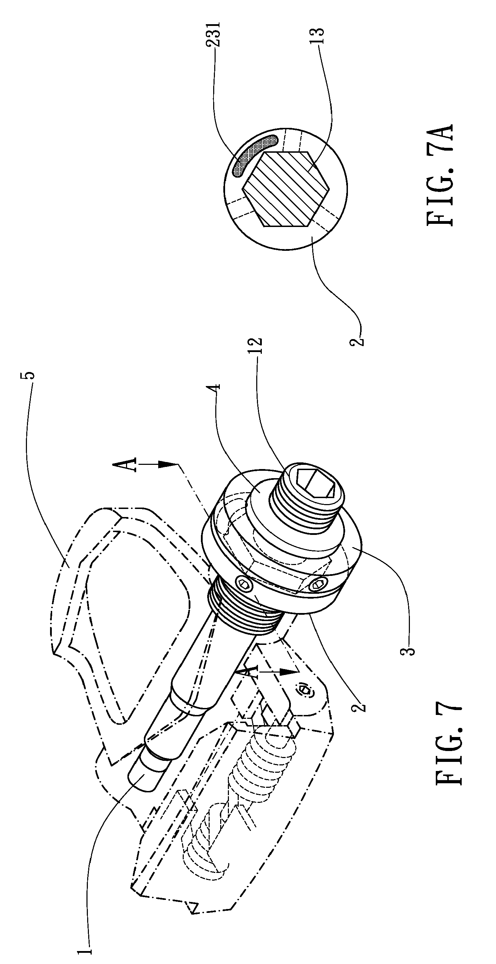

With reference to Figs.6-7, that shows a third embodiment of the present invention. The elements and effects of the third embodiment which are the same with the preferred embodiments are not described, only the differences are described. The third embodiment is substantially another embodiment of the second embodiment. In this embodiment, the securing unit 13 is hexagonal in shape; the securing hole 20 of the driving unit 2 is hexagonal corresponding to the securing unit 13 for the driving unit 2 to be firmly secured to the pedal 5 via the securing unit 13.

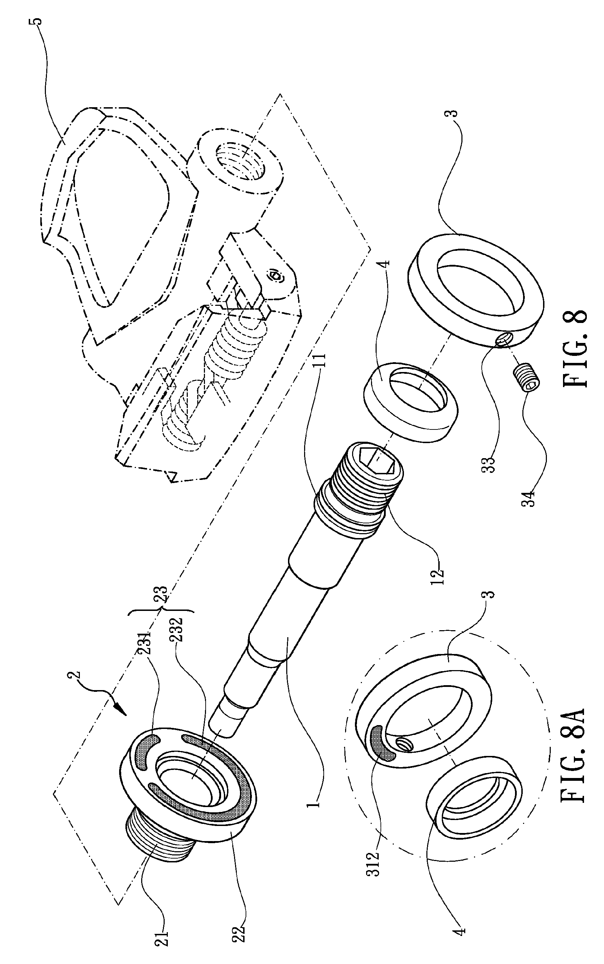

With reference to Fig. 8, that shows a fourth embodiment of the present invention. The elements and effects of the fourth embodiment which are the same with the preferred embodiments are not described, only the differences are described. The fourth embodiment is substantially identical to the first embodiment. In the fourth embodiment, the first magnetic unit 23 which is disposed on the driving portion 22 of the driving unit 2 includes a first magnet 231 and a second magnet 232. The first magnet 231 and the second magnet 232 have opposite polarities. The second magnetic unit 31 of the positioning unit 3 includes a third magnet 312. The third magnet 312 has an opposite polarity with that of the first magnet 231. The second magnet 232 of the first magnetic unit 23 has a size greater than the first magnet 231 and the third magnet 312.

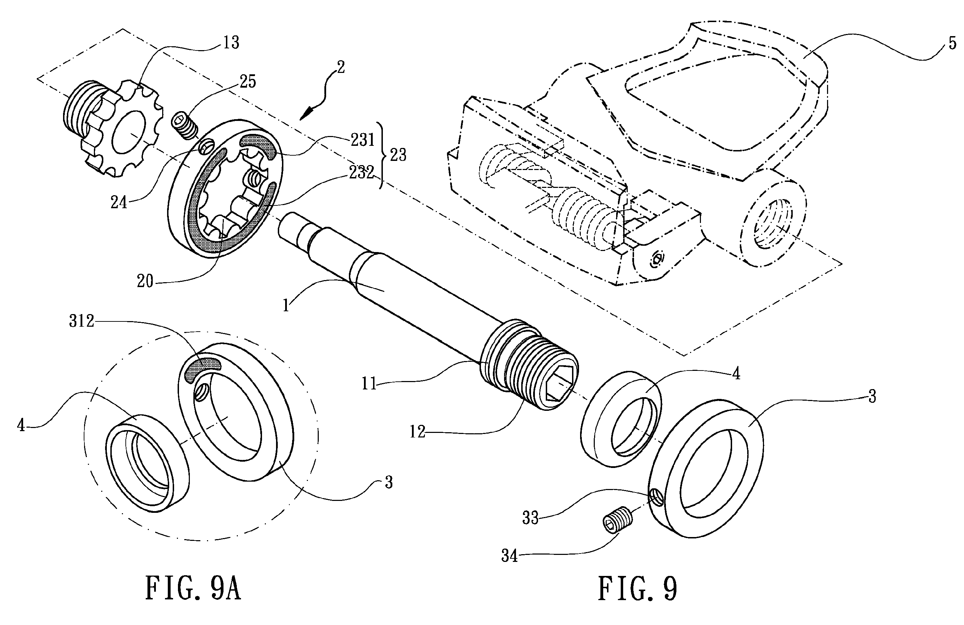

With reference to Fig.9, that shows a fifth embodiment of the present invention. The elements and effects of the fifth embodiment which are the same with the preferred embodiments are not described, only the differences are described. The fifth embodiment is substantially identical to the second embodiment. In the fifth embodiment, the first magnetic unit 23 which is disposed on the driving unit 2 includes a first magnet 231 and a second magnet 232. The first magnet 231 and the second magnet 232 have opposite polarities. The second magnetic unit 31 which is disposed on the positioning unit 3 includes a third magnet 312, the third magnet 312 has an opposite polarity with that of the first magnet 231 of the first magnetic unit 23. The second magnet 232 of the first magnetic unit 23 has a size greater than the first magnet 231 and the third magnet 312.

In view of the above descriptions, the pedal retaining apparatus in accordance with the present invention has the following advantages: first of all, the present invention magnetically retains the pedal 5 at the predetermined position due to the magnetic attraction between the first magnetic unit 23 and the second magnet unit 31. In addition, even when the pedal 5 is rotated relative to the spindle 1 due to an external force, the pedal 5 is able to automatically return to the predetermined position due to the magnetic repulsion between the first magnetic unit 23 and the second magnet unit 31, such that the user is not required to manually flip the pedal 5 to an appropriate position for pedaling every time the pedal is rotated. Furthermore, when the user's foot inadvertently detaches from the pedal 5 during pedaling, the user is able to instantly regain the pedal 5 at an appropriate position for pedaling. Therefore, the user is prevented from losing balance due to failure to instantly retrieve to the pedal 5 or improper force exertion on the pedal 5. The safety for riding has significantly increased. Moreover, the present invention is applicable to various types of pedal assemblies, and is not restricted to pedal assemblies for bicycles. For instance, the present invention is also applicable to pedal assemblies for other equipments such as exercise bike.

## Claims

1. A pedal retaining apparatus comprising:
a driving unit adapted to engage with a pedal for synchronously rotating therewith, the driving unit having a first magnetic unit disposed thereon; and
a positioning unit adapted to be sleeved on a spindle and corresponding to the driving unit, the positioning unit having a second magnetic unit disposed thereon, the second magnetic unit corresponded to the first magnetic unit;
wherein the pedal is magnetically retained in a predetermined position due to a magnetic force between the first magnetic unit of the driving unit and the second magnetic unit of the positioning unit; when the pedal rotates relative to the spindle, the magnetic force between the first magnetic unit of the driving unit and the second magnetic unit of the positioning unit drives the driving unit to rotatably regain the predetermined position for the pedal to synchronously rotate with the driving unit to regain the predetermined position.

2. The pedal retaining apparatus as claimed in claim 1, wherein the first magnetic unit includes a first magnet, the second magnetic unit includes a second magnet; the first magnet and the second magnet having opposite polarities for magnetically retaining the pedal in the predetermined position by a magnetic attraction between the first and the second magnets.

3. The pedal retaining apparatus as claimed in claim 1, wherein the first magnetic unit includes a first magnet, the second magnetic unit includes a third magnet which has a same polarity with that of the first magnet of the first magnetic unit for magnetically driving the pedal to regain the predetermined position by a magnetic repulsion between the first magnet and the third magnet.

4. The pedal retaining apparatus claimed in claim 1, wherein the driving unit includes a threaded portion for threadedly connecting with the pedal and a driving portion located adjacent to the threaded portion, wherein the first magnet unit is disposed on the driving portion.

5. The pedal retaining apparatus as claimed in claim 1 further comprising a securing unit adapted for connecting with the pedal and fixing the driving unit, the securing unit having a polygonal shape; the driving unit having a securing hole axially defined therein for correspondingly engaging with the securing unit such that the driving unit is firmly secured on the pedal by the securing unit.

6. The pedal retaining apparatus as claimed in claim 1 further comprising an adjusting ring disposed in an inner periphery of the positioning unit and adapted to be sleeved on the spindle; the positioning unit having a through hole laterally defined in an outer periphery thereof, a bolt passing through the through hole and abutting against the adjusting ring for preventing the adjusting ring from slipping off the positioning unit such that the adjusting ring is securedly embedded in the positioning unit.

7. The pedal retaining apparatus as claimed in claim 1 further comprising an annular ring adapted to be sleeved on the outer periphery of the spindle; the driving unit located adjacent to the annular ring, the positioning unit sleeved on an outer periphery of the annular ring, such that the driving unit and the positioning ring are spaced apart by the annular ring to prevent from collision with each other due to the magnetic force between the first and the second magnetic units.

8. A pedal retaining apparatus comprising:
a driving unit adapted to engage with a pedal for synchronously rotating therewith, the driving unit having a first magnetic unit disposed thereon, the first magnetic unit including a first magnet; and
a positioning unit corresponding to the driving unit and adapted to be sleeved on a spindle, the positioning unit having a second magnetic unit disposed thereon, the second magnetic unit including a second magnet and a third magnet; the second magnet corresponded to the first magnet, the second magnet having an opposite polarity with that of the first magnet, the third magnet having a same polarity with that of the first magnet;
wherein the pedal is magnetically retained in a predetermined position due to a magnetic attraction between the first magnet of the driving unit and the second magnet of the positioning unit; when the pedal rotates relative to the spindle, a magnetic repulsion between the first magnet of the driving unit and the third magnet of the positioning unit drives the driving unit to rotatably regain the predetermined position for the pedal to synchronously rotate with the driving unit to regain the predetermined position.

9. The pedal retaining apparatus claimed in claim 8, wherein the driving unit includes a threaded portion for threadedly connecting with the pedal and a driving portion located adjacent to the threaded portion, wherein the first magnet unit is disposed on the driving portion.

10. The pedal retaining apparatus as claimed in claim 8 further comprising a securing unit adapted for connecting with the pedal and fixing the driving unit, the securing unit having a polygonal shape; the driving unit having a securing hole axially defined therein for correspondingly engaging with the securing unit such that the driving unit is firmly secured on the pedal by the securing unit.

11. The pedal retaining apparatus as claimed in claim 8 further comprising an adjusting ring disposed in an inner periphery of the positioning unit and adapted to be sleeved on the spindle; the positioning unit having a through hole laterally defined in an outer periphery thereof, a bolt passing through the through hole and abutting against the adjusting ring for preventing the adjusting ring from slipping off the positioning unit such that the adjusting ring is securedly embedded in the positioning unit.

12. A pedal retaining apparatus comprising:
a driving unit adapted to engage with a pedal for synchronously rotating therewith, the driving unit having a first magnetic unit disposed thereon, the first magnetic unit including a first magnet and a second magnet, the first magnet and the second magnet having opposite polarities; and
a positioning unit corresponding to the driving unit and adapted to be sleeved on a spindle, the positioning unit having a second magnetic unit disposed thereon, the second magnetic unit including a third magnet; the third magnet corresponded to the first magnet, the third magnet having an opposite polarity with that of the first magnet;
wherein the pedal is magnetically retained in a predetermined position due to a magnetic attraction between the first magnet of the driving unit and the third magnet of the positioning unit; when the pedal rotates relative to the spindle, a magnetic repulsion between the second magnet of the driving unit and the third magnet of the positioning unit drives the driving unit to rotatably regain the predetermined position for the pedal to synchronously rotate with the driving unit to regain the predetermined position.

13. The pedal retaining apparatus claimed in claim 12, wherein the driving unit includes a threaded portion for threadedly connecting with the pedal and a driving portion located adjacent to the threaded portion, wherein the first magnet unit is disposed on the driving portion.

14. The pedal retaining apparatus as claimed in claim 12 further comprising a securing unit adapted for connecting with the pedal and fixing the driving unit, the securing unit having a polygonal shape; the driving unit having a securing hole axially defined therein for correspondingly engaging with the securing unit such that the driving unit is firmly secured on the pedal by the securing unit.

15. The pedal retaining apparatus as claimed in claim 12 further comprising an adjusting ring disposed in an inner periphery of the positioning unit and adapted to be sleeved on the spindle; the positioning unit having a through hole laterally defined in an outer periphery thereof, a bolt passing through the through hole and abutting against the adjusting ring for preventing the adjusting ring from slipping off the positioning unit such that the adjusting ring is securedly embedded in the positioning unit
